# NEUE EUROPÄISCHE PATENTSCHRIFT

(11) **EP 1 129 871 B2**
(45) Veröffentlichungstag und Bekanntmachung des Hinweises auf die Entscheidung über den Einspruch: **19.05.2010**
(45) Hinweis auf die Patenterteilung: 20.11.2002
(21) Anmeldenummer: 00104700.0
(22) Anmeldetag: 03.03.2000
(51) Int. Cl.: B60J 1/20

(54) **Scheibenrollo-Vorrichtung für Fahrzeugscheiben**
Window blind apparatus for vehicle windows
Dispositif de store de fenêtre pour fenêtres de véhicules

(43) Veröffentlichungstag der Anmeldung: 05.09.2001
(73) Patentinhaber: BOS GmbH & Co. KG, 73760 Ostfildern (DE)
(72) Erfinder: Schwab, Günther, 82061 Neuried (DE)
(74) Vertreter: Rüger, Barthelt & Abel Patentanwälte

(56) Entgegenhaltungen:
- EP-A- 0 694 424
- EP-A- 0 703 106
- DE-A- 3 822 378
- DE-A- 19 539 848
- DE-A- 19 603 099
- DE-A- 19 619 474
- DE-A- 19 803 129
- US-A- 5 085 473
- US-A- 5 947 544

## Beschreibung

Die Erfindung betrifft eine Scheibenrollo-Vorrichtung für Fahrzeugscheibeneinheiten gemäß dem in DE 19619474 A offenbarten Oberbegriff des Anspruchs 1, mit mindestens einem aus- und einfahrbaren Scheibenrollo und mit einer Antriebseinrichtung für den Scheibenrollo.

Es sind Scheibenrollos bekannt, die an der Innenseite von Fahrzeugscheiben angebracht sind und durch Abwickeln von einer Wickelwelle geöffnet werden, so dass sie durch Abdecken der Scheiben einen Sicht- oder Sonnenschutz bieten. Bei einer von einer Rechteckform deutlich abweichenden Fenster- oder Scheibenform kann ein üblicherweise rechteckiger Scheibenrollo die Seitenscheiben jedoch nur ungenügend abdecken.

Aus der EP 0 093 934 ist eine Scheibenrollovorrichtung bekannt, die zwei separate Rollobahnen aufweist. Jede Rollobahn ist an einer eigenen Wickelwelle befestigt, die über einen Federmotor in Aufwickelrichtung vorgespannt ist. Das freie Ende jeder Rollobahn ist mit einem Zugstab versehen, so dass die Rollobahnen parallel nebeneinander von den zueinander koaxialen Wickelwellen abgezogen werden kann. Zum Bewegen der Rollobahn entgegen der Wirkung des Federmotors ist jeder Zugstab über ein Seil mit einer über einen Elektromotor drehbaren Seiltrommel verbunden. Dadurch werden die beiden Rollobahnen mit derselben Geschwindigkeit jeweils in dieselbe Richtung bewegt.

Der Erfindung liegt die Aufgabe zugrunde, eine Scheibenrollo-Vorrichtung für Fahrzeugscheibeneinheiten zu schaffen, die für viele unterschiedliche Scheibenformen geeignet ist und mit einer einfach aufgebauten Antriebseinrichtung antreibbar ist.

Die Aufgabe wird bei der oben genannten Scheibenrollo-vorrichtung erfindungsgemäß dadurch gelöst, dass die beiden Scheibenrollos unterschiedliche Größen aufweisen und derart angeordnet sind, dass sie in unterschiedlichen Richtungen, insbesondere in senkrechter bzw. in horizontaler Richtung, ausfahrbar sind, wobei die Antriebseinrichtung die Scheibenrollos mit unterschiedlicher Geschwindigkeit ausfährt. Als Fahrzeugscheibeneinheit wird jegliche Scheibenanordnung eines Fahrzeugs oder eines Fahrzeugfensters bezeichnet, wie z.B. ein Seitenfenster in einer Fahrzeugtür, eine Seitenscheibe eines rückwärtigen Laderaumes eines Kombis oder dergleichen, eine Heckscheibe oder auch eine Kombination derartiger Scheiben oder Fenster. Bei einer hinteren seitlichen Fahrzeugtür ist die Fahrzeugscheibeneinheit beispielsweise von einer größeren absenkbaren Scheibe und einer kleineren fest eingebauten Scheibe gebildet. Ein Hauptrollo ist dann für die absenkbare Scheibe und ein Hilfsrollo für die fest eingebaute Scheibe vorgesehen. Da die Antriebseinrichtung dafür vorgesehen ist, dass sie sowohl den Hauptrollo wie auch den Hilfsrollo aus- und einfährt, ist kein zusätzlicher eigenständiger Antrieb für den Hilfsrollo erforderlich.

Vorteilhafte Ausgestaltungen der Erfindung sind in den Unteransprüchen angegeben.

Zweckmäßigerweise kann zumindest ein weiterer Scheibenrollo der Fahrzeugscheibeneinheit oder einer weiteren Fahrzeugscheibeneinheit von der Antriebseinrichtung betätigt werden. Somit können auch z. B. die Sonnenrollos von einer Heckscheibe und einer hinteren Seitenscheibe miteinander kombiniert und von dem gemeinsamen Antrieb angetrieben werden.

Die Scheibenrollo-Vorrichtung kann derart eingestellt sein, dass das Ausfahren der Scheibenrollos mittels der Antriebseinrichtung gleichzeitig beginnt oder einsetzt, nachdem z. B. mittels eines Druck- oder Kippschalters ein Signal an die Antriebseinrichtung gesendet worden ist. Alternativ kann das Ausfahren der Scheibenrollos mittels der Antriebseinrichtung nacheinander beginnen, wobei ein Zeitversatz zwischen dem Beginn des Ausfahrens des Hauptrollos und dem Beginn des Ausfahrens des Hilfsrollos z.B. in Abhängigkeit von unterschiedlichen Ausfahrlängen der jeweiligen Rollos festgelegt werden kann. Zweckmäßigerweise kann der Zeitversatz einstellbar sein. Die Antriebseinrichtung fährt die Scheibenrollos mit unterschiedlichen Geschwindigkeiten aus.

Eine bevorzugte Ausgestaltung sieht vor, dass der eine Scheibenrollo als Hauptrollo von einem unteren Scheibenrahmen nach oben ausfährt und dass der andere Scheibenrollo als Hilfsrollo z. B. aus einer im wesentlichen vertikalen Aufnahme in etwa in horizontaler Bewegungsrichtung ausfährt. Jedoch sind auch andere Rolloanordnungen möglich, um eine verbesserte Scheibenabdeckung zu erzielen.

Zum Ausfahren des Hilfsrollos kann ein mit dem Hilfsrollo verbundener Hebel vorgesehen sein, der an einer unterhalb der zugeordneten Seitenscheibe angeordneten Führungseinrichtung verschiebbar gelagert und von der Antriebseinrichtung verschiebbar ist. Wenn der Hebel von der Führungseinrichtung während seiner Verschiebung aus der Bewegungsrichtung heraus verschwenkt wird, so kann zusätzlich eine Anpassung des Rollos an eine von einer Rechteckform wesentlich abweichende Scheibenform erzielt werden.

In einer zweckmäßigen Gestaltung weist der Hebel einen schlitten auf, der in der Führungseinrichtung verschiebbar gelagert ist und während seiner Verschiebung verschwenkt wird. Die Führungseinrichtung kann beispielsweise zwei Führungsbahnen aufweisen, in denen jeweils ein Eingriffselement des Schlittens geführt ist. Wenn die beiden Führungsbahnen über ihre Länge mit unterschiedlichem gegenseitigen Abstand und/oder mit sich veränderndem Kurvenverlauf hinsichtlich der Scheibe angeordnet sind, kann ein gewünschtes Bewegungsverhalten des den Rollo ausfahrenden Hebels eingestellt werden.

Bevorzugt enthält die Antriebseinrichtung Kabel- oder Seilzüge zum Betätigen der beiden Scheibenrollos.

Für die oben angesprochene Festlegung des Bewegungseinsatzes der beiden Rollos kann die Antriebseinrichtung eine Steuereinrichtung mit zwei bewegbaren Steuerelementen aufweisen, wobei jeweils ein Steuerelement mit einem der Scheibenrollos verbunden ist und das erste der Steuerelemente mit einem Antriebsmotor verbunden ist und das zweite der Steuerelemente bewegt. Dabei ist in einer bevorzugten Ausgestaltung das zweite Steuerelement über ein Kabel mit dem Hilfsrollo verbunden, und das erste Steuerelement mit dem Antriebsmotor über ein den Hauptrollo betätigendes Kabel verbunden wobei es gemäß unterschiedlicher Koppelungen mit dem zweiten Steuerelement dieses zweite Steuerelement bewegt.

Für ein bestimmtes Bewegungsverhalten kann vorgesehen sein, dass die Steuereinrichtung eine lineare oder eine gekrümmte Schiene aufweist, an der die Steuerelemente verschiebbar gelagert sind. Damit kennen die beiden Rollos mit unterschiedlichen Geschwindigkeiten aus- und eingefahren werden.

Bevorzugt sind die Scheibenrollos mit ihren Führungen, die z.B. aus Kunststoff oder aus Metall hergestellt sein können, sowie die Antriebseinrichtung an einer Innenverkleidung der Fahrzeugstruktur vormontiert oder an der Fahrzeugstruktur z. B. über einen Aggregateträger angebracht.

Zweckmäßigerweise ist der Hauptrollo mit Führungszapfen in zwei seitlichen vertikalen Führungsschienen geführt und greift in Schließstellung in eine Nut am oberen Scheibenrahmen ein.

Nachfolgend wird ein Ausführungsbeispiel der Erfindung unter Bezugnahme auf zeichnungen näher erläutert. Es zeigt
- Fig. 1: in einer Draufsicht eine Innenseile einer Fahr- zeugtür mit zwei Scheibenrollos und einer An- triebseinrichtung für die Scheibenrollos;
- Fig. 2: in einer Schnittansicht an der Schnittstelle F2 in Fig. 1 eine Führungsschiene des ersten Schei- benrollos;
- Fig. 3: in einer Schnittansicht an der Schnittstelle F3 in Fig. 1 einen Fensterholm mit einer zweiten Führungsschiene des ersten Scheibenrollos und mit einer Aufnahme für den zweiten Scheibenrollo;
- Fig. 4: in einer Innenansicht in schematischer Darstel- lung die Fahrzeugtür mit der Antriebseinrichtung; und
- Fig. 5a - 5g: in schematischen Darstellungen unterschied- liche Stellungen von Steuerelementen einer Steuerschiene der Antriebseinrichtung.

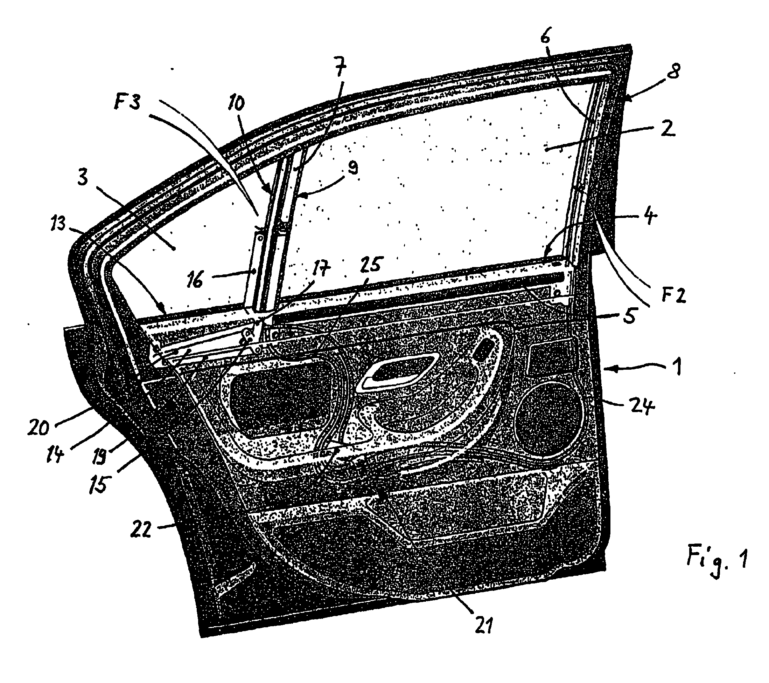

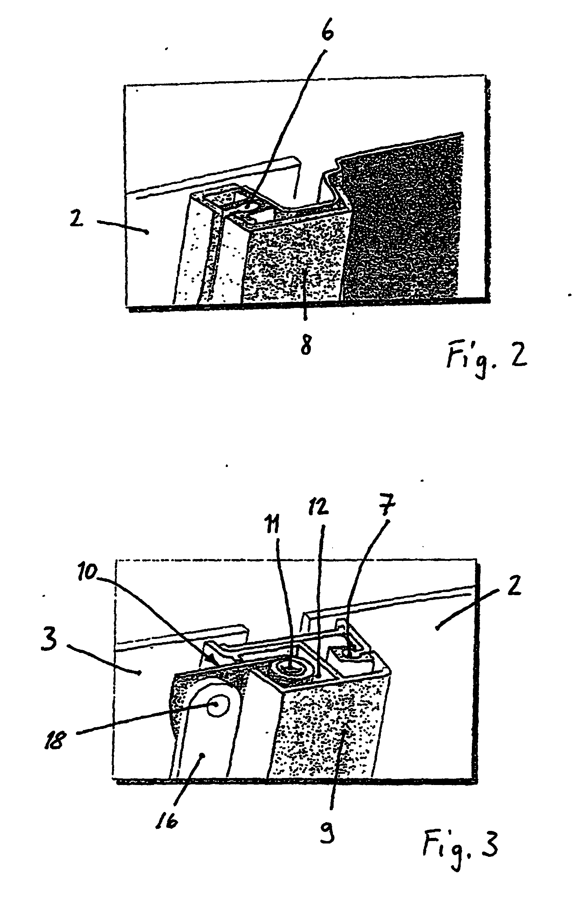

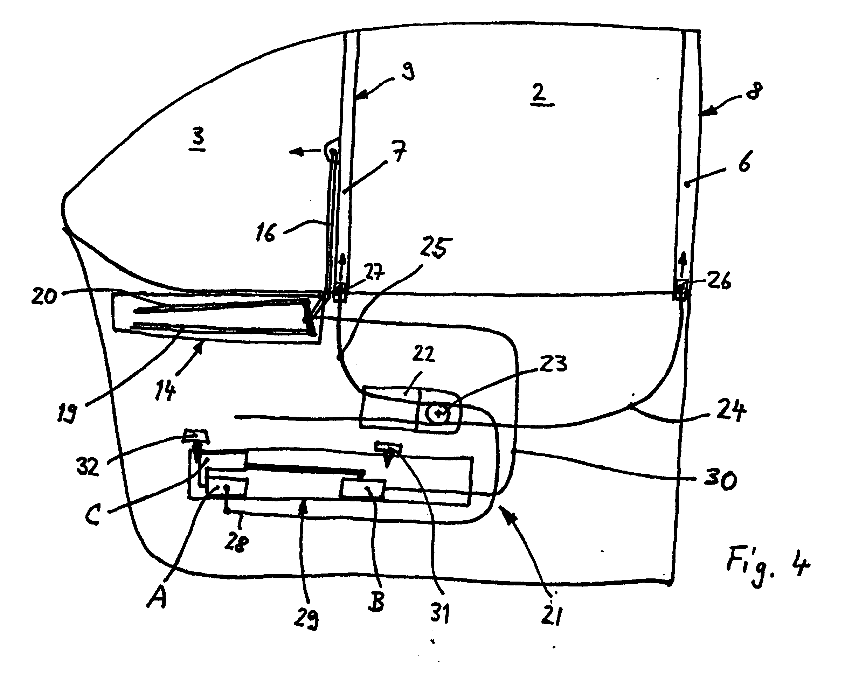

Eine hintere linke Seitentür 1 eines Personenkraftfahrzeugs enthält ein Seitenfenster mit einer in der Seitentür 1 absenkbaren vorderen Scheibe 2 und einer feststehenden hinteren Scheibe 3 (siehe Fig. 1). Am Unterrand 4 der vorderen Scheibe 2 ist ein Hauptrollo 5 angeordnet, der in seiner in Fig. 1 dargestellten geöffneten Stellung auf einer durch Federkraft vorgespannten Wickelachse aufgewickelt ist, die von einer Türverkleidung abgedeckt ist. Der Hauptrollo 5 ist an seinem ausziehbaren Vorderrand, der einen Veretärkungsbügel enthalten kann, beidendig über ein jeweiliges Gleitelement 26,27 (siehe Fig. 4) in einer vorderen bzw. hinteren vertikalen Führungsschiene 6 und 7 geführt (siehe 5 Fig. 1 bis 4), die an einem vorderen und einem hinteren Fensterholm 8 und 9, die die Scheibenführungen enthalten, an der Innenseite der Seitentür 1 angebracht sind.

Ein Hilfsrollo 10 für die hintere Scheibe 3 ist auf einer durch Federkraft vorgespannten Wickelachse 11 aufgewickelt und in einem Aufnahmeraum 12 an dem hinteren Fensterholm 9 untergebracht. Unterhalb und entlang des Unterrandes 13 der hinteren Scheibe 3 ist eine Führungseinrichtung 14 angeordnet, an der ein Schlitten 15 für einen Hebel 16 zum Abwickeln des Hilfsrollos 10 verschiebbar gelagert ist. Der Hebel 16 ist einerseits über ein von der Türverkleidung abgedecktes Winkelstück 17 mit dem Schlitten 15 verbunden, nahe der Innenseite der Scheibe 3 angeordnet, und ist andererseits mittels einer Befestigung 18 mit einem Vorderrand der Stoffbahn des Hilfsrollos 10 verbunden. Die Führungseinrichtung 14 enthält zwei übereinander angeordnete, beispielsweise lineare Führungsbahnen 19 und 20, in denen jeweils ein Gleitelement des Schlittens 15 verschiebbar aufgenommen ist. Der Abstand zwischen den beiden Führungsbahnen 19, 20 nimmt von der aufgewickelten Offenstellung des Hilfsrollos 10 (siehe Fig. 1) zur abgewickelten Schließstellung hin ab, so dass der Schlitten 15 während seiner Verschiebung zwischen der Offenstellung und der Schließstellung eine Schwenkbewegung ausführt, die sich auf den Hebel 16 überragt, so dass sich der Befestigungspunkt 18 des Hebels 16 an der Stoffbahn beim Schließen des Hilfsrollos 10 auf einer entsprechenden Bewegungsbahn bewegt, beispielsweise absenkt.

Eine Antriebseinrichtung 21 (siehe Fig. 4, in Fig. 1 nicht vollständig dargestellt) für den Hauptrollo 5 und den Hilfsrollo 10 enthält einen;elektrischen Antriebsmotor 22 mit einem Getriebe und einem Antriebsrad 23, das mit zwei zug- und druckfesten, in Rohren verschiebbar aufgenommenen Kabeln 24 und 25 in Antriebseingriff steht. Die beiden Kabel 24, 25 sind derart zu der vorderen bzw. der hinteren vertikalen Führungsschiene 6 bzw. 7 geführt und mit dem jeweiligen Gleitelement 26 bzw. 27 des Hauptrollos 5 verbunden, dass der Antriebsmotor 22 gleichzeitig und synchron die beiden Gleitelemente 26 und 27 in den Führungsschienen 6, 7 zum Öffnen oder Schließen des Hauptrollos 5 aufwärts bzw. abwärts bewegt. Ein Auslaufende 28 des einen der beiden Kabel, beispielsweise des zur hinteren Führungsschiene 7 geführten Kabels 25, ist mit einem ersten Steuer- oder Gleitelement A verbunden (siehe vergrößerte schematische Darstellung in Fig. 4), das an einer Steuerschiene 29 verschiebbar gelagert ist. An der Steuerschiene 29 sind des weiteren ein zweites Steuer- oder Gleitelement B und ein drittes Steuer- oder Gleitelement C verschiebbar gelagert. Das zweite Steuer- oder Gleitelement B ist über ein Kabel 30 mit dem Schlitten 15 des Hebels 16 für den Hilfsrollo 10 verbunden. Das dritte Steuer- oder Gleitelement C ist mit dem zweiten Steuer- oder Gleitelement B in einem festgelegten Abstand zu diesem gekoppelt, so dass sie eine gemeinsam verschiebbare Einheit bilden. An der Steuerschiene 29 sind zwei Schalter 31 und 32 angeordnet, die von dem dritten Steuer- oder Gleitelement C betätigbar sind.

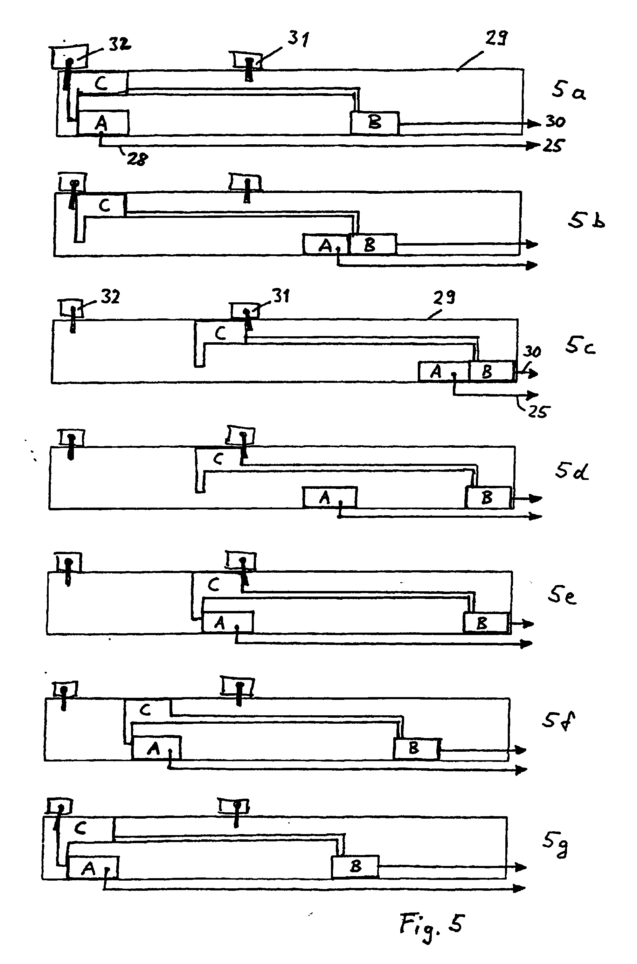

In einer Ausgangsstellung der beiden Scheibenrollos 5 und 10, in der sie aufgewickelt oder geschlossen sind, sind die drei Steuer- oder Gleitelemente A, B und C in ihren Grundpositionen an der Steuerschiene 29 angeordnet (siehe Fig. 5a), Zum Öffnen oder Ausfahren der beiden Scheibenrollos 5, 10 verschiebt der Antriebsmotor 22 die beiden Kabel 24, 25, die den 15 Hauptrollo 5 mittels der Gleitelemente 26, 27 abwickeln und entlang der Scheibe 2 bewegen. Gleichzeitig wird über das Auslaufende 28 des Kabels 25 das erste Steuer- oder Gleitelement A entlang der Steuerschiene 29 verschoben, bis es auf das zweite Steuer- oder Gleitelement B trifft (siehe Fig. 5b) und dieses mitnimmt. Damit wird über die einsetzende Bewegung des zweiten Steuer- oder Gleitelements B und über das Kabel 30 der Hilfsrollo 10 ausgefahren. Gemeinsam mit dem zweiten Steuer- oder Gleitelement B wird das dritte Steuer- oder 25 Gleitelement C verschoben, bis in einer vollständig geöffneten Stellung des Hauptrollos 5 und des Hilfsrollos 10, in der sie die beiden Scheiben 2 bzw. 3 abdecken, das dritte Steuer- oder Gleitelement C den Schalter 31 betätigt (siehe Fig. 5c), der den Antriebsmotor 22 abschaltet.

Der Abstand zwischen dem ersten und dem zweiten Steuer- oder Gleitelement (A und B) bestimmt den Leerweg, den das erste Steuer- oder Gleitelement A und damit der Hauptrollo 5 zurücklegt, bis die Ausfahrbewegung des Hilfsrollos 10 einsetzt. Dieser Abstand ist entsprechend den konstruktiven Gegebenheiten festlegbar.

Zum Schließen oder Einfahren des Hauptrollos 5 und des Hilfsrollos 10 bewegt der Antriebsmotor 22 die beiden Kabel 24, 25 und damit den Hauptrollo 5. Gleichzeitig wird über das Auslaufende 28 des Kabels 25 das erste Steuer- oder Gleitelement A an der Steuerschiene 29 zurückbewegt (Fig. 5d). Das zweite Steuer- oder Gleitelement B verbleibt noch in seiner Position, 45 so dafür der Hilfsrollo 10 noch nicht geöffnet wird. Das zurückbewegte erste Steuer- oder Gleitelement A trifft schließlich auf das dritte Steuer-oder Gleitelement C (siehe Fig. 5e) und nimmt dieses wie auch das mit dem dritten Steuer- oder Gleitelement C gekoppelte zweite Steuer- oder Gleitelement B, das den Hilfsrollo 10 öffnet, mit (Fig. 5f). Der Endstellung der geschlossenen Scheibenrollos 5, 10 entsprechen die Positionen der drei Gleitelemente A, B und C gemäß Fig. 5g, die mit den Grundpositionen gemäß Fig. 5a übereinstimmen. Das dritte Steuer-oder Gleitelement C schaltet über einen Kontakt mit dem Schalter 32 den Antriebsmotor 22 aus.

Die Scheibenrollos 5, 10 mit ihren Führungen und der Antriebseinrichtung können mittels eines Aggregateträgers an der Fahrzeugtür befestigt und von der Türverkleidung abgedeckt sein oder teilweise oder gänzlich an der Türverkleidung montiert sein.

Die Kabel 24, 25 und 30 sind vorzugsweise Spiralkabel aus Metall oder Kunststoff oder Seile in der Art von Bowdenzügen.

Selbstverständlich kennen der Hauptrollo 5 wie auch der Hilfsrollo 10 unterschiedlich gestaltet, an den Scheiben an anderen Stellen angeordnet und in unterschiedlichen Bewegungsrichtungen ausfahrbar sein. Die abwickelbare Rollobahn kann ein Stoff, eine Folie aus Kunststoff oder Metall oder ein ähnliches flexibles, blickdichtes Material sein. Die Rollos kennen auch ausfahrbare Lamellenvorhänge aufweisen.

Der ausziehbare Vorderrand des Hauptrollos 5 kann entsprechend der Form des Oberrandes der Scheibe 2 gestaltet sein. Insbesondere ist ein Verstärkungsbügel des Vorderrandes derart geformt, dass er in eine Nut am oberen Scheibenrahmen eintreten kann und somit eine vollständige Abdeckung der Scheibe ermöglicht.

Die als zwei miteinander verbundene Bauteile dargestellten zweites und drittes Steuer- oder Gleitelement B und C der Steuerschiene 29 können durch ein Steuer- oder Gleitelement ersetzt sein, das in einem festgelegten Abstand zwei gegenüberliegende Mitnehmer oder Anschläge für das erste Steuer-oder Gleitelement A aufweist. Die Mitnehmer oder Anschläge können verstellbar ausgeführt sein, so dass das Bewegungsverhalten einstellbar ist.

Die Antriebseinrichtung soll mindestens eine Über- oder Untersetzungseinrichtung aufweisen, da das Bewegen von unterschiedlichen Geschwindigkeiten mit nur einer Antreibseinrichtung dies notwendigerweise voraussetzt.

Statt der mechanisch betätigten Schalter 31, 32 zum Abschalten des Antriebsmotors kann auch eine Steuerung verwendet werden, die z. B. die Rotation des Antriebsmotors überwacht und dementsprechend Steuersignale erzeugt.

### Bezugszeichenliste:

- 2: vordere Scheibe
- 3: hintere Scheibe
- 4: Unterrand
- 5: Hauptrollo
- 6: Führungsschiene
- 7: Führungsschiene
- 8: Fensterholm
- 9: Fensterholm
- 10: Hilfsrollo
- 11: wickelachse
- 12: Aufnahmeraum
- 13: Unterrandes
- 14: Führungseinrichtung
- 15: Schlitten
- 16: Hebel
- 17: Winkelstück
- 18: Befestigung
- 19: Führungsbahn
- 20: Führungsbahn
- 21: Antriebseinrichtung
- 22: Antriebsmotor
- 23: Antriebsrad
- 24: Kabel
- 25: Kabel
- 26: Gleitelement
- 27: Gleitelement
- 28: Auslaufende
- 29: Steuerschiene
- 30: Kabel
- 31: Schalter
- 32: Schalter
- A: Erstes Steuer- oder Gleitelement
- B: Zweites Steuer- oder Gleitelement
- C: Drittes Steuer- oder Gleitelement

## Patentansprüche

1. Scheibenrollo-Vorrichtung für Fahrzeugscheibeneinheiten mit mindestens einem aus- und einfahrbaren Scheibenrollo und mit einer Antriebseinrichtung für den Scheibenrollo, wobei zumindest zwei Scheibenrollos (5, 10) für eine Fahrzeugscheibeneinheit (2,3) vorgesehen sind, die mittels der einen Antriebseinrichtung (21) ein- und ausfahrbar sind, und die Antriebseinrichtung (21) Kabel- oder Seilzuge (24, 25, 30) zum Betätigen der Scheibenrollos (5, 10) aufweist,
**dadurch gekennzeichnet,**
**dass** die beiden Scheibenrollos (5, 10) unterschiedliche Größen aufweisen und derart angeordnet sind, dass sie in unterschiedlichen Richtungen, insbesondere in senkrechter bzw. in horizontaler Richtung, ausfahrbar sind, und
**dass** die Antriebseinrichtung (21) die Scheibenrollos (5, 10) mit unterschiedlicher Geschwindigkeit ausfährt.

2. Vorrichtung nach Anspruch 1, **dadurch gekennzeichnet, dass** die Fahrzeugscheibeneinheit (2,3) ein Seitenfenster einer hinteren, seitlichen Fahrzeugtür ist.

3. Vorrichtung nach Anspruch 1 oder 2, **dadurch gekennzeichnet, dass** ein weiterer Scheibenrollo der Fahrzeugscheibeneinheit (2,3) oder einer weiteren Fahrzeugscheibeneinheit von der Antriebseinrichtung (21) betätig ist.

4. Vorrichtung nach einem der Ansprüche 1 bis 3, **dadurch gekennzeichnet, dass** das Ausfahren der Scheibenrollos (5,10) mittels der Antriebseinrichtung (21) gleichzeitig beginnt.

5. Vorrichtung nach einem der Ansprüche 1 bis 3, **dadurch gekennzeichnet, dass** das Ausfahren der Scheibenrollos mittels der Antriebseinrichtung (21) nacheinander, insbesondere mit einstellbarem Zeitversatz, beginnt.

6. Vorrichtung nach einem der Ansprüche 1 bis 5, **dadurch gekennzeichnet, das** an einer Fahrzeugscheibeneinheit zwei Scheibenrollos vorgesehen sind, und dass, der eine Scheibenrollo ein Hauptrollo (5) ist und von einem unteren Scheibenrahmen nach oben ausfährt und dass der andere Scheibenrollo ein Hilfsrollo (10) ist.

7. Vorrichtung nach Anspruch 6, **dadurch gekennzeichnet, dass** der Hilfsrollo (10) aus einer im wesentlichen vertikalen Aufnahme (12) in etwa in horizontaler Bewegungsrichtung ausfährt.

8. Vorrichtung nach einem der Ansprüche 6 oder 7, **dadurch gekennzeichnet, dass** zum Ausfahren des Hilfsrollos (10) ein mit dem Hilfsrollo (10) verbundener Hebel (16) an einer unterhalb der Seitenscheibe (3) angeordneten Führungseinrichtung (14) verschiebbar gelagert und von der Antriebseinrichtung (21) verschiebbar ist.

9. Vorrichtung nach Anspruch 8, **dadurch gekennzeichnet, dass** der Hebel (16) von der Führungseinrichtung (14) während seiner Verschiebung verschwenkt wird.

10. Vorrichtung nach Anspruch 8 oder 9, **dadurch gekennzeichnet, dass** der Hebel (16) einen Schlitten (15) aufweist, der in der Führungseinrichtung (14) verschiebbar gelagert ist und während seiner Verschiebung verschwenkt wird.

11. Vorrichtung nach einem der Ansprüche 1 bis 10, **dadurch gekennzeichnet, dass** die Antriebseinrichtung (21) eine Steuereinrichtung (29) mit zwei bewegbaren Steuerelementen aufweist, wobei jeweils ein Steuerelement (A, B) mit einem der Scheibenrollos (5 bzw. 10) verbunden ist und das erste Steuerelemente (A) mit einem Antriebsmotor (22) verbunden ist und das zweite Steuerelement (B) bewegt.

12. Vorrichtung nach Anspruch 11, **dadurch gekennzeichnet dass** das zweite Steuerelement (B) über ein Kabel (30) mit dem Hilfsrollo (10) verbunden ist und dass das erste Steuerelement (A) mit dem Antriebsmotor (22) über ein den Hauptrollo (5) betätigendes Kabel (25, 28) verbunden ist und gemäß unterschiedlicher Koppelungen mit dem zweiten Steuerelement (B) dieses zweite Steuerelement (B) bewegt.

13. Vorrichtung nach Anspruch 11 oder 12, **dadurch gekennzeichnet, dass** die Steuereinrichtung (29) eine lineare oder eine gekrümmte Schiene aufweist, an der die Steuerelemente (A,B) verschiebbar gelagert sind.

14. Vorrichtung nach einem der Ansprüche 1 bis 13, **dadurch gekennzeichnet, dass** die Scheibenrollos (5, 10) mit ihren Führungen sowie die Antriebseinrichtung (21) an einer Innenverkleidung der Fahrzeugstruktur, an einem an der Innenverkleidung oder der Fahrzeugstruktur festlegbaren Aggregateträger oder an der Fahrzeugstruktur angebracht sind.

15. Vorrichtung nach einem der Ansprüche 6 bis 14, **dadurch gekennzeichnet, dass** der Hauptrollo (5) mit Führungszapfen in zwei seitlichen vertikalen Führungsschienen (6, 7) geführt ist und in Schließstellung in eine Nut am oberen Scheibenrahmen eingreift.

## Claims

1. Window blind apparatus for vehicle window units, having at least one window blind which can be extended and retracted and having a drive device for the window blind, at least two window blinds (5, 10) being provided for a vehicle window unit (2, 3), which can be extended and retracted by means of a drive device (21), and the drive device (21) having pull cables or cords (24, 25, 30) for actuating the window blind, **characterized in that**
the two window blinds (5, 10) are of different sizes and are arranged in such a way that they can be extended in different directions, in particular in the vertical and in the horizontal direction respectively, and
**in that** the drive device (21) extends the window blinds (5, 10) at different speeds.

2. Apparatus according to Claim 1, **characterized in that** the vehicle window unit (2, 3) is a side window of a vehicle rear side door.

3. Apparatus according to Claim 1 or 2, **characterized in that** a further window blind of the vehicle window unit (2, 3) or of a further vehicle window unit is actuated by the drive device (21).

4. Apparatus according to one of Claims 1 to 3, **characterized in that** the extension of the window blinds (5, 10) by means of the drive device (21) begins simultaneously.

5. Apparatus according to one of Claims 1 to 3, **characterized in that** the extension of the window blinds by means of the drive device (21) begins sequentially, in particular with an adjustable time delay.

6. Apparatus according to one of Claims 1 to 5, **characterized in that** two window blinds are provided on a vehicle window unit, and **in that** one window blind is a main blind (5) and extends upwards from a lower window frame, and **in that** the other window blind is an auxiliary blind (10).

7. Apparatus according to Claim 6, **characterized in that** the auxiliary blind (10) extends approximately in a horizontal direction of motion from an essentially vertical receptacle (12).

8. Apparatus according to either of Claims 7 and 8, **characterized in that**, in order to extend the auxiliary blind (10), a lever (16) connected to the auxiliary blind (10) is mounted so as to be displaceable on a guide device (14) arranged below the side window (3) and can be displaced by the drive device (21).

9. Apparatus according to Claim 8, **characterized in that** the lever (16) is pivoted by the guide device (14) during its displacement.

10. Apparatus according to Claim 8 or 9, **characterized in that** the lever (16) has a slide (15), which is mounted so as to be displaceable in the guide device (14) and is pivoted during its displacement.

11. Apparatus according to one of Claims 1 to 10, **characterized in that** the drive device (21) has a control device (29) with two movable control elements, in each case one control element (A, B) being connected to one of the window blinds (5 or 10) and the first control element (A) being connected to a drive motor (22) and moving the second control element (B).

12. Apparatus according to Claim 11, **characterized in that** the second control element (B) is connected to the auxiliary blind (10) by a cable (30), and **in that** the first control element (A) is connected to the drive motor (22) by a cable (25, 28), which actuates the main blind (5) and moves the second control element (B) in accordance with different means of coupling to this second control element (B).

13. Apparatus according to Claim 11 or 12, **characterized in that** the control device (29) has a linear or curved rail, on which the control elements (A, B) are mounted so as to be displaceable.

14. Apparatus according to one of Claims 1 to 13, **characterized in that** the drive device (21) and the window blinds (5, 10) with their guides are attached to an interior lining of the vehicle structure, to an assembly carrier that can be fixed to the interior lining or to the vehicle structure, or to the vehicle structure.

15. Apparatus according to one of Claims 6 to 14, **characterized in that** the main blind (5) is guided in two lateral vertical guide rails (6, 7) by means of guide pins and, in the closed position, engages in a groove in the upper window frame.

## Revendications

1. Dispositif de store de fenêtres pour fenêtres de véhicules, muni d'au moins un store de fenêtre pouvant être rentré ou déployé et d'un dispositif d'entraînement pour le store de fenêtre,
au moins deux stores de fenêtre (5, 10) étant prévus pour une fenêtre de véhicule (2, 3), qui peuvent être rentrés ou déployés au moyen dudit dispositif d'entraînement (21), et
le dispositif d'entraînement (21) présente des commandes par câble ou par filin (24, 25, 30) pour l'actionnement des stores de fenêtre (5, 10),
**caractérisé en ce que**
les deux stores de fenêtre (5, 10) présentent des tailles différentes et sont arrangés de telle manière qu'ils puissent être déployés dans des directions différentes, en particulier dans les directions verticale et horizontale respectivement, et que
le dispositif d'entraînement (21) déploie les stores de fenêtre (5, 10) à des vitesses différentes.

2. Dispositif selon la revendication 1, **caractérisé en ce que** la fenêtre de véhicule (2, 3) est une fenêtre latérale d'une porte de véhicule latérale arrière.

3. Dispositif selon la revendication 1 ou 2, **caractérisé en ce qu'**un store de fenêtre supplémentaire de la fenêtre de véhicule (2, 3) ou une fenêtre de véhicule supplémentaire est actionné(e) par le dispositif d'entraînement (21).

4. Dispositif selon l'une des revendications 1 à 3, **caractérisé en ce que** le déploiement des stores de fenêtre (5, 10) commence simultanément au moyen du dispositif d'entraînement (21).

5. Dispositif selon l'une des revendications 1 à 3, **caractérisé en ce que** le déploiement des stores de fenêtre (5, 10) commence l'un après l'autre, notamment avec un décalage dans le temps réglable, au moyen du dispositif d'entraînement (21).

6. Dispositif selon l'une des revendications 1 à 5, **caractérisé en ce que** deux stores de fenêtre sont prévus sur une fenêtre de véhicule, et **en ce que** l'un des stores de fenêtre est un store principal (5) et qui se déploie vers le haut depuis un cadre de fenêtre inférieur, et **en ce que** l'autre store de fenêtre est un store auxiliaire (10).

7. Dispositif selon la revendication 6, **caractérisé en ce que** le store auxiliaire (10) se déploie à peu près selon un mouvement horizontal à partir d'un logement (12) essentiellement vertical.

8. Dispositif selon l'une des revendications 6 ou 7, **caractérisé en ce que**, pour déployer le store auxiliaire (10), un levier (16) raccordé au store auxiliaire (10) est placé de manière mobile sur un dispositif de guidage (14) disposé en-dessous de la vitre latérale (3), et peut être déplacé par le dispositif d'entraînement (21).

9. Dispositif selon la revendication 8, **caractérisé en ce que** le levier (16) est pivoté pendant son déplacement par le dispositif de guidage (14).

10. Dispositif selon la revendication 8 ou 9, **caractérisé en ce que** le levier (16) présente un coulisseau (15) qui est disposé de manière mobile dans le dispositif de guidage (14) et est pivoté pendant son déplacement.

11. Dispositif selon l'une des revendications 1 à 10, **caractérisé en ce que** le dispositif d'entraînement (21) présente un dispositif de commande (29) avec deux éléments de commande mobiles, un élément de commande (A, B) étant respectivement raccordé à l'un des stores de fenêtre (5 ou 10) et le premier élément de commande (A) est raccordé à un moteur d'entraînement (22) et déplace le deuxième élément de commande (B).

12. Dispositif selon la revendication 11, **caractérisé en ce que** le deuxième élément de commande (B) est raccordé à l'aide d'un câble (30) au store auxiliaire (10) et **en ce que** le premier élément de commande (A) est raccordé au moteur d'entraînement (22) à l'aide d'un câble (25, 28) actionnant le store principal (5) et que ce deuxième élément de commande (B) se déplace selon des couplages différents avec le deuxième élément de commande (B).

13. Dispositif selon la revendication 11 ou 12, **caractérisé en ce que** le dispositif de commande (29) présente un rail linéaire ou coudé sur lequel sont placés les éléments de commande (A, B) de manière mobile.

14. Dispositif selon l'une des revendications 1 à 13, **caractérisé en ce que** les stores de fenêtre (5, 10) avec leurs guidages, ainsi que le dispositif d'entraînement (21), sont appliqués sur un revêtement intérieur de la structure du véhicule, sur un support d'agrégat pouvant être fixé sur le revêtement intérieur ou sur la structure du véhicule, ou sur la structure du véhicule.

15. Dispositif selon l'une des revendications 6 à 14, **caractérisé en ce que** le store principal (5) est guidé par des chevilles de guidage dans deux rails de guidage (6, 7) verticaux latéraux et a prise dans une rainure sur le cadre supérieur de la vitre en position de verrouillage.
